## Europäisches Patentamt
## European Patent Office
## Office européen des brevets

(19)

(11) Veröffentlichungsnummer: **0 066 539**
**B1**

(12) **EUROPÄISCHE PATENTSCHRIFT**

(45) Veröffentlichungstag der Patentschrift:
**29.01.86**

(21) Anmeldenummer: **82810213.7**

(22) Anmeldetag: **19.05.82**

(51) Int. Cl.⁴: **C 21 C 5/56,** F 27 D 13/00,
F 27 D 3/00

(54) **Vorrichtung zur Wärmebehandlung von Schrott.**

(30) Priorität: **25.05.81 CH 3401/81**

(43) Veröffentlichungstag der Anmeldung:
**08.12.82 Patentblatt 82/49**

(45) Bekanntmachung des Hinweises auf die Patenterteilung:
**29.01.86 Patentblatt 86/5**

(84) Benannte Vertragsstaaten:
**AT CH FR GB IT LI NL**

(56) Entgegenhaltungen:
**EP - A - 0 056 773
DE - B - 1 273 550
DE - B - 2 302 012
DE - C - 871 306
DE - C - 935 332
DE - U - 7 427 889
US - A - 2 624 565
US - A - 2 818 247
US - A - 2 962 174
US - A - 3 383 099
US - A - 3 537 694**

(73) Patentinhaber: **SCHWEIZERISCHE ALUMINIUM AG,
CH-3965 Chippis (CH)**

(72) Erfinder: **Bouillé, Bernard, 6, rue Moukarmance,
F-89600 St. Florentin (FR)**

## Beschreibung

Die Erfindung betrifft eine Vorrichtung zur Wärmebehandlung von in einem Speicherraum aufgenommenem Schrott, wobei der Speicherraum lösbar mit einem Rauchgasabzug eines Ofenraumes mit separater Beschickungsöffnung verbunden ist.

Nach der DE-AS 1 273 550 ist eine Vorrichtung bekannt, bei der Schrott mittels einer kippbaren Chargiervorrichtung zu einem Ofenraum mit Rauchgasabzug und Beschickungsöffnung geführt wird. Die lösbar an dem Rauchgasabzug angeschlossene Chargiervorrichtung enthält einen mit Abwärme aus dem Ofen gespeisten Speicherraum, in dem der Schrott vorgewärmt wird. Bei einer derartigen Vorrichtung wird für jeden Entleerungsvorgang die Verbindung zwischen Chargiervorrichtung und Rauchgasabzug gelöst, und die Chargiervorrichtung muss mit Kranzügen gekippt werden.

In der DE-PS 935 332 wird eine direkt vor einem Schmelzofen aufzustellende, fahrbare Kammer vorgeschlagen, welche zum Vorwärmen des darin befindlichen Einsatzgutes von den Ofenabgasen durchströmt wird. Dabei strömen die Ofenabgase gesamthaft durch die Beschickungsöffnung in die Vorwärmkammer. Eine solche Anordnung ohne separaten Abgasabzug erlaubt jedoch keine optimale Ausnützung der Abgaswärme.

In der EP-A-0 056 773 wird ein Schmelzofen mit integriertem Beschickungsteil beschrieben, worin Schrott durch die im Ofen entstehenden Rauchgase vorgewärmt und sodann von einem Kolben in die Schmelze geschoben wird. Eine volle Ausnützung der Rauchgaswärme ist hierbei nicht möglich. Zudem fehlt die angestrebte Lösbarkeit des Beschickungsteils vom Schmelzofen.

Angesichts dieser Gegebenheiten hat sich der Erfinder das Ziel gesetzt, eine Vorrichtung der eingangs erwähnten Art so auszugestalten, dass die genannten Nachteile vermieden werden und dass die Vorrichtung zum einen leicht zu handhaben und zum anderen mit verhältnismässig geringem Energieverlust zu betreiben ist.

Zur Lösung dieser Aufgabe führt zum einen, dass an den Speicherraum eine Austragsvorrichtung anschliesst, welche in die Beschickungsöffnung einschiebbar ist. Dabei soll ein Speicherraum bevorzugt eine obere Einlauföffnung für Schrott und eine dazu seitlich versetzte Austragsöffnung aufweisen und wenigstens eine der Öffnungen durch Verschlussorgane verschliessbar sein; es wird damit ein gegen die Aussenluft dichter Speicherraum hergestellt, der nach einem weiteren Merkmal der Erfindung Teil eines Rauchgas- oder Abwärmekreislaufes ist, in welchem also der Schrott zur Aufwärmung zwischengelagert werden kann.

Vorteilhaft weist im Speicherraum ein Schubkörper eine zur Einlauföffnung pultartige Fläche auf.

Als besonders günstig hat es sich ergeben, beidseits in Seitenwänden des Speicherraums Schlitze als Ein- und Austrittsöffnung für den Abwärmestrom vorzusehen. Die Höhe der Schlitze soll bevorzugtermassen in Beschickrichtung zunehmen, um den dem Ofenraum nächstliegenden Schrott am besten vorzuwärmen.

Der eigentliche Austrag für den vorgewärmten Schrott besteht im Rahmen der Erfindung aus einer unterhalb der Austragsöffnung angeordneten Beschickungsrinne mit darin befindlichem Schubkörper, welcher vorteilhaft ausfahrbar gelagert, gegebenenfalls teleskopartig verlängerbar ist. Die Beschickungsrinne wird nach dem Öffnen des Ofenmaules in den Ofenraum hineingeführt und lässt in dessen Zentrum dank erfindungsgemäss zugeordneter Schuborgane den Schrott auslaufen; die Beschickungsrinne besteht nach einem weiteren Merkmal der Erfindung aus feuerfestem Werkstoff und ragt in ausgefahrenem Zustand in den Ofenraum hinein.

Da die erfindungsgemässe Vorrichtung in einer bevorzugten Ausgestaltung eine Batterie von Schmelzöfen erfasst, denen ein gemeinsamer Chargierwagen zugeordnet ist, hat es sich als günstig erwiesen, sowohl Speicherraum als auch Auftragsvorrichtung auf einem Wagen als Chargiereinrichtung fahrbar anzuordnen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: eine Schrägsicht auf einen Teil eines Schmelzofens mit Zuführvorrichtung für Schrott od. dgl.;

Fig. 2: einen Längsschnitt durch die in Fig. 1 dargestellten Vorrichtungsteile;

Fig. 3: ein vergrössertes Detail der Fig. 2 in einer geänderten Ausführungsform;

Fig. 4: die Draufsicht auf das Detail der Fig. 3;

Fig. 5: einen schematisierten Längsschnitt durch die Vorrichtungsteile zu Beginn des Verfahrens;

Fig. 6: die Seitenansicht zu einem Teil der Fig. 5;

Fig. 7 bis Fig. 10: weitere schematische Darstellungen zum Verfahrensablauf.

Der Beschickungsöffnung 1 eines Schmelzofens 2 ist zum Zuführen von Schrott S ein Chargierwagen 3 vorgesetzt, dessen Laufrollen 4 durch Spurausnehmungen 5 in einer Bühnenoberfläche 6 geführt sind.

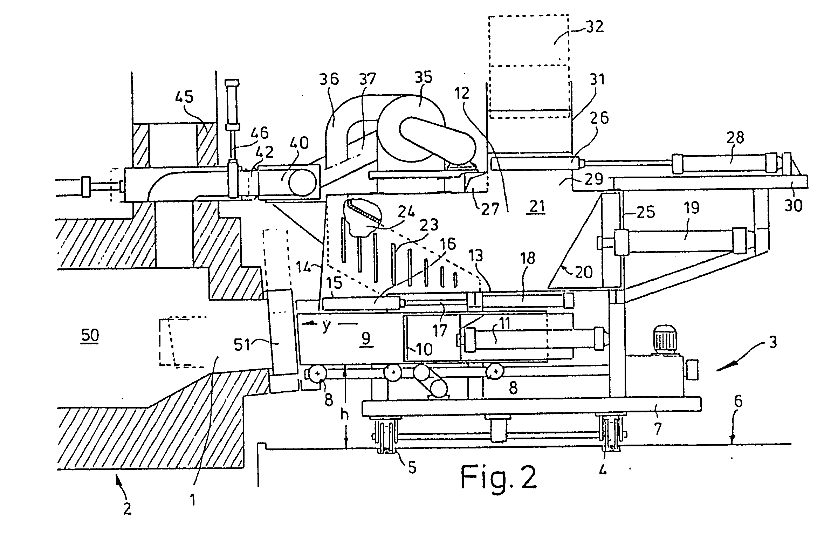

In einem von der Unterkante jener Beschickungsöffnung 1 bestimmten Abstand h zur Bühnenoberfläche 6 (Fig. 2) ist auf einem Sockelgestell 7 des Chargierwagens 3 eine horizontal auf Rollen 8 quer zur Laufrichtung x verfahrbare Beschickrinne 9 U-förmigen Querschnittes vorgesehen, in der ein Druckkasten 10 in Pfeilrichtung y durch einen Druckzylinder 11 verschiebbar lagert. Oberhalb der Beschickrinne 9 erstreckt sich ein Speicherraum 12, in dessen Boden 13 entlang der dem Schmelzofen 2 benachbarten Wand 14 eine Austragsöffnung 15 verläuft, die in Fig. 2 von einem Horizontalschieber 16 verschlossen ist; diesen verbindet eine Kolbenstange 17 mit einem Hydraulikzylinder 18.

Ebenfalls durch einen Hydraulikzylinder 19 kann eine zum Boden 13 geneigte Druckplatte 20 innerhalb des Speicherraumes 12 in Beschickrichtung y verschoben werden. Diese Druckplatte 20 überfährt auf ihrem Hubweg zur Frontwand 14 des Speicherraums 12 hin in dessen Seitenwänden 21, 22 vorgesehene Luftschlitze 23. Diese verbinden den Speicherraum 12 mit einem Flankenkasten 24.

Nahe der in Beschickrichtung y hinteren Wand 25 des Speicherraumes 12 weist eine diesen nach oben hin überspannende Abdeckung 27 einen Einlaufschlitz 29 mit Verschlussschieber 26 auf, dessen Hubzylinder 28 auf einem Ausleger 30 des Chargierwagens 3 ruht.

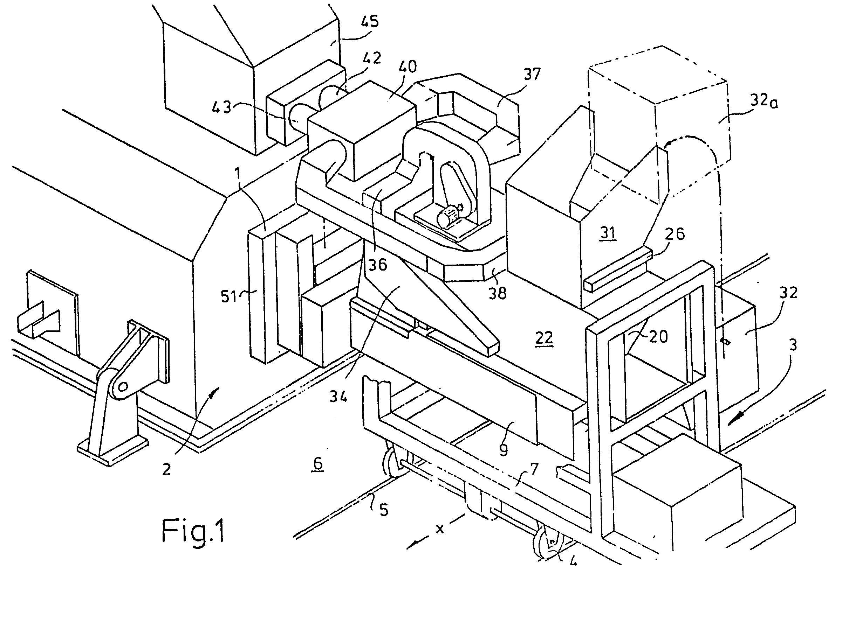

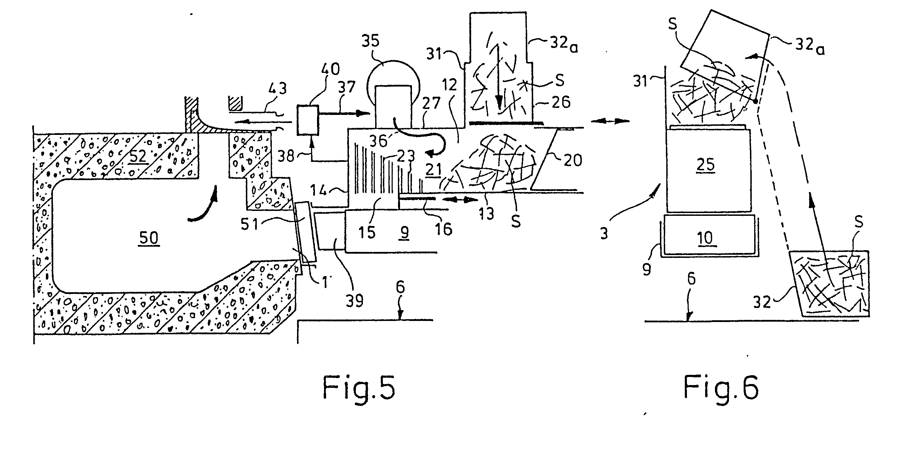

Über dem Verschlussschieber 26 befindet sich eine Schurre 31, die – wie insbesondere in Fig. 1 verdeutlicht – einen Beschickungskorb 32 mit Schrott aufnehmen kann. Dieser Beschickungskorb 32 wird in einer unteren Stellung beladen und dann zur Schurre 31 angehoben, wie dies die Kontur $32_a$ in Fig. 1, 6 verdeutlicht.

Auf der Abdeckung 27 ist ein Gebläse 35 angebracht, dessen Ausblasseite an eine Luftleitung 36 eines an der zweiten Seitenwand 22 des Speicherraumes 12 angeordneten Flankenkastens 34 und dessen Einzugseite über eine Leitung 37 an einen Gasmischer 40 angeschlossen ist. Den anderen Flankenkasten 24 verbindet ein Luftrohr 38 ebenfalls mit jenem Gasmischer 40.

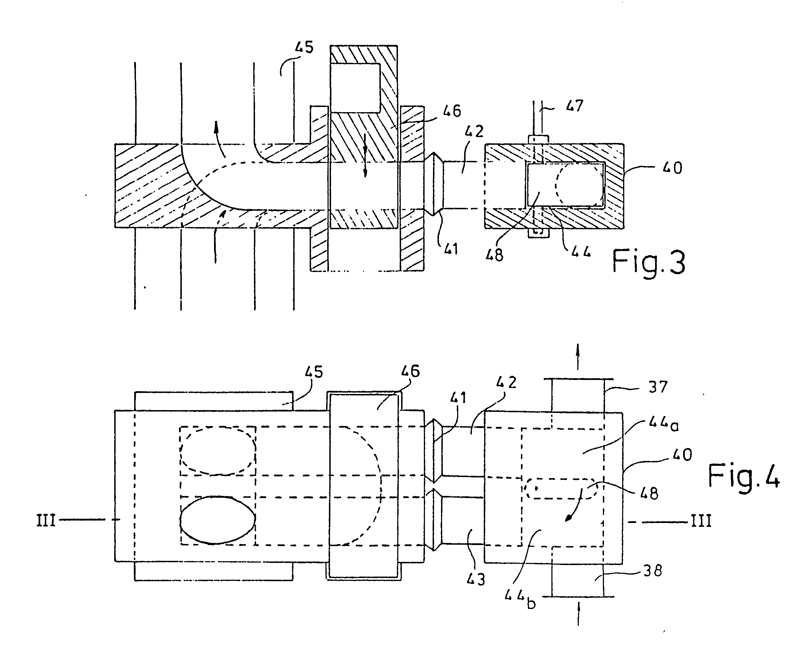

Der Gasmischer 40 ist – wie insbes. die Fig. 3, 4 zeigen – über Rohrkupplungen 41 durch zwei Rohre 42, 43 mit einem Rauchgasabzug 45 des Schmelzofens 2 bzw. mit einem Druckregulierorgan 46 an diesem Rauchgasabzug 45 verbunden.

Aus dem Ofenraum 50 aufsteigende Rauchgase gelangen durch das Rohr 42 zum Innenraum 44 des Gasmischers 40, in dem um eine vertikale Welle 47 eine Querschnittsklappe 48 als von aussen steuerbares Sperrorgan die Gase in der in Fig. 4 dargestellten Lage im Rauchgasraum $44_a$ zur Luftleitung 37 führt. Diese Gase durchwandern dann den Speicherraum 12, um über die Luftleitung 38 zum anderen Rauchgasraum $44_b$ zu gelangen. Von diesem strömen sie dann über das Rohr 43 ab.

Durch die Fig. 3, 4 wird deutlich, dass die Stellung der Querschnittsklappe 48 und/oder des Druckregulierorgans 46 sowohl die Menge der Rauchgase als auch deren Druck im Speicherraum 12 beeinflussen.

Wenn der Inhalt des mit Schrott S gefüllten Beschickungskorbes 32 durch die Schurre 31 dem Speicherraum 12 zugeführt worden ist, wird deren Einlaufquerschnitt 29 durch den Verschlussschieber 26 gesperrt, wie dies Fig. 5 verdeutlicht. Auf den Verschlussschieber 26 kann dann eine weitere Schrottcharge zwischengelagert werden.

Die auf dem Boden 13 des Speicherraumes 12 ruhende erste Schrottcharge lagert noch ausserhalb des von den einander gegenüberliegenden Luftschlitzes 23 bestimmten Strömungweges der Rauchgase bis die geneigte Druckplatte 20 in Beschickrichtung y geführt wird; der Schrott S gelangt dabei in den vorderen Teil des Speicherraumes 12 und so in den Strömungsweg der Rauchgase. Durch diese fällt der Schrott S in die in Fig. 5 bis 10 zweiteilige Beschickrinne 9, deren Vorrinne 39 in der beschriebenen Verfahrensstufe bis zum Ofenschieber 51 ausgeschoben ist. Im übrigen ist bei 52 die Ausmauerung des Wärmeofens 1 angedeutet.

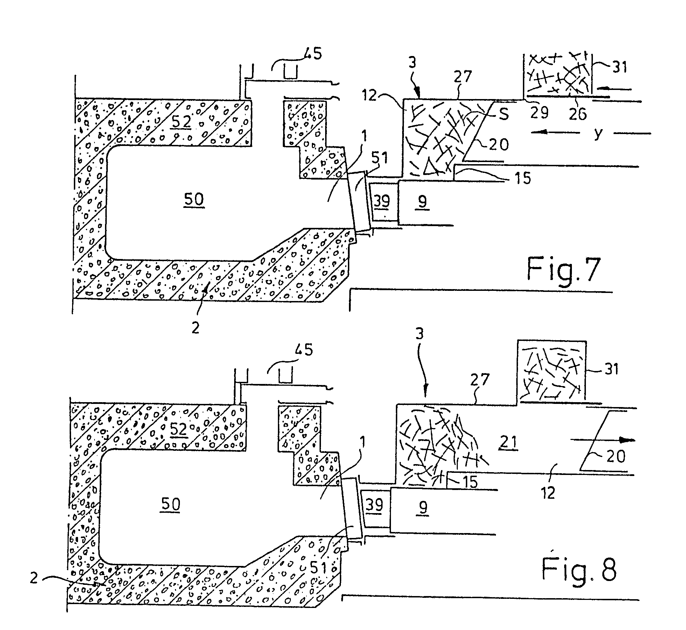

In Fig. 8 ist die Druckplatte 20 wieder hinter den Einlaufschlitz oder -querschnitt 29 zurückgenommen, so dass eine weitere Beschickung des Speicherraumes 12 erfolgen kann.

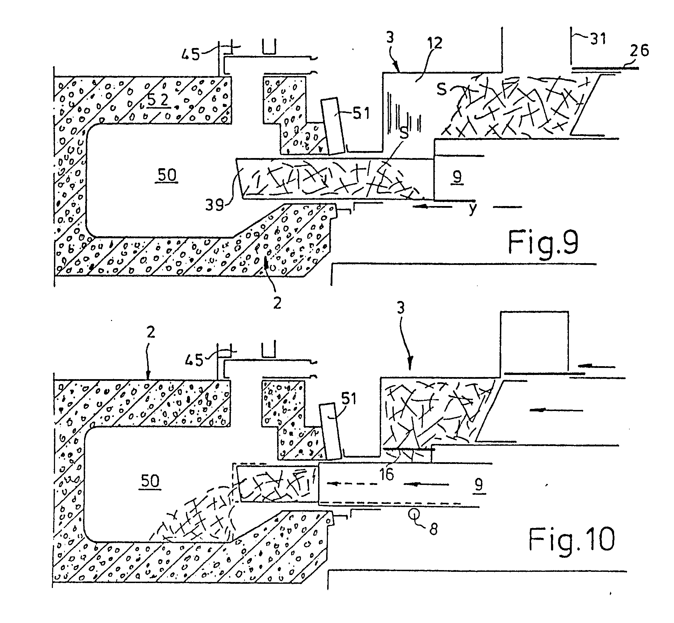

Wie vor allem die Fig. 9 erkennen lässt, dichtet das Haufwerk des Schrotts S den vorderen Teil des Speicherraumes 12 – und damit den Strömungsweg der Rauchgase – gegen die Schurre 31 hin ab, so dass ohne weiteres der Ofenschieber 51 angehoben und die Vorrinne 39 in den Ofenraum 50 gefahren werden kann.

Die Vorrinne 39 kragt dann in diesen Ofenraum 50 ein und der Schrott S wird durch den in Fig. 2 verdeutlichten Druckkasten 10 ausgeschoben.

Das Nachführen der Beschickrinne 9 auf ihren Rollen 8 wird in Fig. 10 gezeigt; bei diesem Nachschieben wird der Schrott S in den Ofeninnenraum 50 ausgestossen. Vor oder während des Beschickens wird im übrigen die Austragsöffnung 15 durch den Horizontalschieber 16 erneut geschlossen, so dass der geschilderte Beschickzyklus wieder beginnen kann, in dessen Verlauf eine intensive Vorwärmung des Schrotts S durch die Rauchgase erfolgt.

**Patentansprüche**

1. Vorrichtung zur Wärmebehandlung von in einem Speicherraum aufgenommenem Schrott, wobei der Speicherraum lösbar mit einem Rauchgasabzug eines Ofenraumes mit separater Beschickungsöffnung verbunden ist, dadurch gekennzeichnet, dass an den Speicherraum (12) eine Austragsvorrichtung (9, 39) anschliesst, welche in die Beschickungsöffnung (1) einschiebbar ist.

2. Vorrichtung nach Anspruch 1, dadurch gekennzeichnet, dass der Speicherraum (12) eine obere Einlauföffnung (29) für Schrott (S) und eine dazu seitlich versetzte Austragsöffnung (15) aufweist und dass wenigstens eine der Öffnungen (15, 29) durch Verschlussorgane (16, 26) verschliessbar ist.

3. Vorrichtung nach Anspruch 1 oder 2, dadurch gekennzeichnet, dass in dem Speicherraum (12) ein Schubkörper (20) eine zur Einlauföffnung (29) pultartig geneigte Fläche aufweist.

4. Vorrichtung nach einem der Ansprüche 1 bis 3, dadurch gekennzeichnet, dass beidseits in Seitenwänden (21, 22) des Speicherraums (12) Schlitze (23) als Ein- und Austrittsöffnungen für den Abwärmestrom vorgesehen sind und die Höhe der Schlitze in der Seitenwand in Beschickungsrichtung (y) zunimmt.

5. Vorrichtung nach einem der Ansprüche 1 bis 4, dadurch gekennzeichnet, dass unterhalb der Austragsöffnung (15) für den Schrott (S) eine Beschickrinne (9) und in dieser ein Schubkörper (10) angeordnet ist.

6. Vorrichtung nach Anspruch 5, dadurch gekennzeichnet, dass die Beschickrinne (9) ofenwärts ausfahrbar gelagert ist.

7. Vorrichtung nach Anspruch 5 oder 6, dadurch gekennzeichnet, dass die Beschickrinne (9, 39) mehrteilig sowie teleskopartig verlängerbar ausgebildet ist.

8. Vorrichtung nach einem der Ansprüche 5 bis 7, dadurch gekennzeichnet, dass die Beschickrinne (9, 39) aus feuerfestem Werkstoff geformt ist und in ausgefahrenem Zustand in den Ofenraum (50) hineinragt (Fig. 8).

9. Vorrichtung nach einem der Ansprüche 1 bis 8, dadurch gekennzeichnet, dass sowohl Speicherraum (12) als auch Austragsvorrichtung (9, 39) auf einem Wagen als Chargiereinrichtung (3) fahrbar angeordnet sind.

## Claims

1. Apparatus for the heat treatment of scrap received in a storage chamber, the storage chamber being disengageably connected with a waste gas flue of a furnace chamber with separate charging opening, characterised in that the storage chamber (12) is adjoined by a discharge apparatus (9, 39) which can be pushed into the charging opening (1).

2. Apparatus according to Claim 1, characterised in that the storage chamber (12) comprises an upper entry opening (29) for scrap (S) and a discharge opening (15) laterally offset in relation thereto and in that at least one of the openings (15, 29) is closable by closure elements (16, 26).

3. Apparatus according to Claim 1 or 2, characterised in that in the storage chamber (12) a pusher body (20) has a surface inclined in desktop manner to the entry opening (29).

4. Apparatus according to one of Claims 1 to 3, characterised in that slots (23) are provided on both sides in side walls (21, 22) of the storage chamber (12) as entry and outlet openings for the flow of waste heat and the height of the slots in the side wall increases in the charging direction (y).

5. Apparatus according to one of Claims 1 to 4, characterised in that a charging channel (9) is arranged beneath the discharge opening (15) for the scrap (S) and a pusher body (10) is arranged in this channel.

6. Apparatus according to Claim 5, characterised in that the charging channel (9) is mounted for driving out towards the furnace.

7. Apparatus according to Claim 5 or 6, characterised in that the charging channel (9, 39) is made in a plurality of parts and telescopically extensible.

8. Apparatus according to one of Claims 5 to 7, characterised in that the charging channel (9, 39) is shaped from refractory material and in the extended condition protrudes into the furnace chamber (50) (fig. 8).

9. Apparatus according to one of Claims 1 to 8, characterised in that both the storage chamber (12) and the discharge apparatus (9, 39) are arranged movably on a trolley as charging apparatus (3).

## Revendications

1. Dispositif pour le traitement thermique de riblons admis dans une chambre d'entreposage, cette chambre d'entreposage étant reliée de façon non permanente, à une évacuation de gaz de fumée de l'intérieur d'un four comportant une ouverture de chargement distincte, caractérisé en ce qu'à la chambre d'entreposage (12) se raccorde un dispositif d'évacuation (9, 39) que l'on peut enfiler dans l'ouverture de chargement (1).

2. Dispositif selon la revendication 1, caractérisé en ce que la chambre d'entreposage (12) présente une ouverture d'entrée supérieure (29) pour les riblons (S) et une ouverture de sortie (15) latéralement décalée par rapport à elle; et en ce que l'on peut fermer au moins l'une des ouvertures (15, 29) au moyen d'organes de fermeture (16, 26).

3. Dispositif selon la revendication 1 ou la revendication 2, caractérisé en ce que dans la chambre d'entreposage (12) un pousseur (20) présente une surface inclinée, à la façon d'un pupître, en direction de l'ouverture d'entrée (29).

4. Dispositif selon l'une des revendications 1 à 3, caractérisé en ce que des deux côtés, dans les parois latérales (21, 22) de la chambre d'entreposage (12) sont prévues des fentes (23) servant d'ouvertures d'entrée et de sortie pour le courant de chaleur perdue; et en ce que la hauteur des fentes va en croissant dans la paroi latérale dans la direction du chargement (y).

5. Dispositif selon l'une des revendications 1 à 4, caractérisé en ce que sous l'ouverture de sortie (15) des riblons (S) est disposée une goulotte de chargement (9) et, dans cette goulotte, un pousseur (10).

6. Dispositif selon la revendication 5, caractérisé en ce que la goulotte de chargement (9) peut se développer en extension en direction du four.

7. Dispositif selon la revendication 5 ou la revendication 6, caractérisé en ce que la goulotte de chargement (9, 39) est conçue en plusieurs pièces ou à la façon d'un télescope pour pouvoir s'allonger.

8. Dispositif selon l'une des revendications 5 à 7, caractérisé en ce que la goulotte de chargement (9, 39) est constituée d'un matériau réfractaire et pénètre à l'intérieur du four (50) lorsqu'elle est en extension (fig. 8).

9. Dispositif selon l'une des revendications 1 à 8, caractérisé en ce qu'aussi bien la chambre d'entreposage (12) que le dispositif de sortie (9, 39) sont disposés de façon à pouvoir se déplacer sur un chariot constituant un dispositif de chargement (3).

Fig.1

Fig. 2

Fig.3

Fig.4

**Fig.5**

**Fig.6**

Fig. 7

Fig. 8

Fig.9

Fig.10

0 066 539